(19) Europäisches Patentamt
European Patent Office
Office européen des brevets

(11) **EP 4 051 438 B1**

(12) **EUROPEAN PATENT SPECIFICATION**

(45) Date of publication and mention
of the grant of the patent:
**23.10.2024 Bulletin 2024/43**

(21) Application number: **20811914.9**

(22) Date of filing: **30.10.2020**

(51) International Patent Classification (IPC):
*B05B 15/63* (2018.01)    *B05B 12/00* (2018.01)
*B25G 1/10* (2006.01)    *B29B 7/72* (2006.01)
*B29B 7/74* (2006.01)    *B29B 7/82* (2006.01)
*G05D 11/13* (2006.01)    *B05B 7/04* (2006.01)
*B05B 7/16* (2006.01)    *B05B 7/00* (2006.01)
*B05B 7/12* (2006.01)    *B05B 7/24* (2006.01)
*B05B 12/08* (2006.01)    *B05B 12/10* (2006.01)
*B05B 12/14* (2006.01)    *B05B 15/65* (2018.01)

(52) Cooperative Patent Classification (CPC):
**B05B 12/006; B05B 12/1436; B05B 15/63;**
**B25G 1/102; B29B 7/72; B29B 7/7447;**
**B29B 7/823; B29B 7/826; G05D 11/13;**
B05B 7/0018; B05B 7/0408; B05B 7/1209;
B05B 7/166; B05B 7/1693; B05B 7/2497;    (Cont.)

(86) International application number:
**PCT/US2020/058426**

(87) International publication number:
**WO 2021/087410 (06.05.2021 Gazette 2021/18)**

(54) **SYSTEMS AND METHODS FOR IMPROVED FLUID GUN DELIVERY SYSTEMS**

VORRICHTUNGEN UND VERFAHREN FÜR VERBESSERTE
FLUIDAUSGABEPISTOLENVORRICHTUNGEN

SYSTÈMES ET PROCÉDES POUR DES SYSTÈMES DE DISTRIBUTION DE PRODUIT FLUIDE
PAR PISTOLET

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.10.2019 US 201962928859 P**

(43) Date of publication of application:
**07.09.2022 Bulletin 2022/36**

(73) Proprietor: **Carlisle Fluid Technologies, LLC**
**Scottsdale, Arizona 85254 (US)**

(72) Inventors:
• **BYRNE, Peter David**
**Louisville, Colorado 80027 (US)**
• **NELSON, Bruce Earl**
**Oakdale, Minnesota 55128 (US)**

(74) Representative: **Gill Jennings & Every LLP**
**The Broadgate Tower**
**20 Primrose Street**
**London EC2A 2ES (GB)**

(56) References cited:
**WO-A1-2005/018900    WO-A1-2018/204231**
**US-A- 3 790 030    US-A- 6 158 624**
**US-A1- 2012 012 677    US-A1- 2013 061 725**
**US-A1- 2015 129 685**

(52) Cooperative Patent Classification (CPC): (Cont.)
B05B 12/085; B05B 12/10; B05B 12/1418;
B05B 15/65

(52) Cooperative Patent Classification (CPC): (Cont.)
B05B 12/085; B05B 12/10; B05B 12/1418;
B05B 15/65

**Description**

BACKGROUND

The subject matter disclosed herein relates to delivery systems and methods, and more specifically, to fluid gun delivery systems and methods.

Some fluid delivery systems, such as Spray Polyurethane Foam (SPF) systems are used for applying foam insulation to residential or commercial structures. These systems deliver two or more materials through hoses from a stationary pumping system (e.g., proportioner system) to a fluid gun or spray foam gun used to apply the material to a structure. The proportioner system may be located at a distance from the actual foam application work area and spray foam gun. It would be useful to improve fluid gun delivery systems.

WO2018204321A1 discloses a mixer design for a plural component system, US6158624A discloses a foam dispensing gun, and US3790030A discloses a liquid spray dispenser. WO2005018900A1 discloses a multi-component fluid nozzle assembly with detachable nozzle spray tip.

US2015129685A1 discloses an ergonomic handle for a fluid applicator spray gun and US2012012677A1 discloses a spray gun handle support and quick release trigger assembly. US2013061725A1 discloses an ergonomic hand tool holder that supports a tool for use.

BRIEF DESCRIPTION

Certain aspects commensurate in scope with the claimed invention are summarized below.

In a first aspect, a spray gun includes a mix chamber assembly having at least two bores configured to receive a first fluid and a second fluid, and a chamber fluidly coupled to the at least two bores, the chamber configured to mix the first and the second fluid. The spray gun further includes a handle, and a winged extension disposed to contact at least a portion of an operator's back hand when the operator holds the spray gun via the handle. The spray gun further comprises a strap, wherein the winged extension comprises a first opening configured to receive a first end of the strap, and wherein a second end of the strap attaches to a lower portion of the handle. A fluid delivery system comprising the spray gun is also provided.

In a second aspect, a method of manufacturing a spray gun includes manufacturing a mix chamber assembly having at least two bores configured to receive a first fluid and a second fluid, and a chamber fluidly coupled to the at least two bores, the chamber configured to mix the first and the second fluid. The method further includes manufacturing a handle having a winged extension disposed to contact at least a portion of an operator's back hand when the operator holds the spray gun via the handle. The method additionally includes manufacturing a spray gun body, and manufacturing a spray gun head configured to receive the mix chamber. The winged extension comprises a first and a second opening configured to receive a first end of a strap, and wherein the first end of the strap may be inserted into the first opening or into the second opening.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is block diagram of an embodiment of an impingement system, such as a multi-component fluid delivery system (e.g., SPF system);

FIG. 2 is a flow chart of an embodiment of a process suitable for control of the fluid delivery system of FIG. 1.

FIG. 3 is a side perspective view of an embodiment of a spray gun included in the fluid delivery system of FIG. 1;

FIG. 4 is a rear perspective view of an embodiment of a spray gun included in the fluid delivery system of FIG. 1;

FIG. 5 is a front perspective view of an embodiment of a spray gun included in the fluid delivery system of FIG. 1;

FIG. 6 is a schematic side view of a front portion of an embodiment of a spray gun system included in the fluid delivery system of FIG. 1 showing a mix chamber assembly when a spray gun trigger is in a resting position;

FIG. 7 is a schematic side view of a front portion of an embodiment of a spray gun system included in the fluid delivery system of FIG. 1 showing a mix chamber assembly in a "spray" position;

FIG. 8 is a front view showing an embodiment of a mix chamber assembly showing two lateral bores leading into a chamber suitable for mixing fluid; and

FIG. 9 is a perspective view depicting an embodiment of a threaded mix chamber assembly and a mix tip.

DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure are directed to systems and methods that may improve fluid delivery in impingement systems, including two-part Spray Polyurethane Foam (SPF) systems. Many Spray Polyurethane Foam (SPF) and similar two-component (2K) dispensing systems deliver two fluid components at high pressure to a spray gun or other dispensing device, where the materials undergo impingement mixing in a chamber or nozzle before being ejected from the gun and onto a substrate to form a foam insulation layer or other coating. Impingement mixing relies on the inertia of two or more streams of reactive fluids to initiate a chemical reaction required for creating the foam or coating on the substrate. The efficiency of the impingement mixing process is dependent on many factors, including the pressure and temperature of the fluid streams, the size of the streams, the geometry of the mixing chamber and orifices, and the relative trajectories of the two impinging streams. If the pressure of the impinging component streams may be significantly different, or are outside of certain processing limits, poor mixing of the reactive fluids may occur. This can lead to poor foam or coating quality, irregular or undesirable deposition patterns on the substrate, and/or build-up of material within the gun or dispensing device. In extreme pressure imbalance conditions, one of the component streams can "cross-over" into the orifice of the opposing stream and result in polymerization and hardening of material within the gun or device itself. This results in partial or complete occlusion of one stream, rendering the system unusable. Cross-over is a common failure mode in 2K systems, and a means to detect and prevent this occurrence would reduce or eliminate this problem and result in less downtime.

The temperatures of the impinging fluid streams may also be important parameters for controlling the chemical reaction rate and efficiency. If fluid temperatures are too low, the chemical reaction may be incomplete - or may be too slow for the foam or coating material to adhere properly to the target substrate. If they are too high, the reaction may be too fast, resulting in brittle foam or coatings, high amounts of overspray and atomization, or clogging of the gun/dispensing system.

Most material suppliers of 2K systems provide "target" pressures and temperatures of the fluid materials that should produce good output. In certain SPF systems, pressures and temperatures of both fluids at or near the spray gun are not known. Instead, pressure is measured at or near the fluid pumps, and used to control the pressure of the two materials at that location only. These pumps are at a significant distance from the spray gun, which is connected to the pumps via a hydraulic hose. Due to hose geometry, hose length, flow rates, and fluid properties, an unknown pressure drop will occur over the length of the hose. As a result, the actual pressure of the two fluids at or near the spray gun are unknown, uncontrolled, and possibly unequal. In addition, most SPF employ "yoked" piston pumps, driven by a single actuator. The actuator is either an electric motor or a hydraulic or pneumatic piston. Systems that use yoked pumps inherently lack the ability to provide independent pressure control of the two fluids.

In most SPF systems, the temperatures of both fluid streams are measured and controlled with independent heating systems as part of the proportioning (proportioner) system. The proportioner is typically contained in a truck or trailer at the job site, but outside of the structure that is being insulated. In most systems, one fluid stream contains an electronic temperature sensor within the hose and in contact with the fluid material. This temperature sensor is used to control heating elements within the hose structure for both materials, which is required to prevent or reduce cooling of the fluid between the proportioner and the spray gun..

In certain embodiments, the techniques described herein provide for spray gun embodiments that include improved impingement techniques via introduction of fluid into non-tangential channels leading to an impingement chamber. The spray gun embodiments may further include an air capless gun that does not include an air cap mechanism that would be used to shape or to direct the flow of air through the gun, for example, to clean the gun, as further described below. The air capless gun may include less components than an air cap gun, thus providing for ease of maintenance and lowering cost of manufacture. The spray gun may also include "wings" disposed on the gun to conformably fit onto a user's hand. The wings may be suitable for spreading a gun weight over a larger area of the user's hand. Accordingly, the spray gun may be more easily and comfortably operated by the user.

The techniques described herein also provide for control over the pressures between two or more hoses to minimize their difference at/near a gun (e.g., spray gun). The control may derive or otherwise obtain a desired difference between pressure at/near the gun. The desired pressure difference may be zero, may be some other user input value, and/or may be a derived value. The derived value, for example, may be derived via a controller so that the derived value pressure difference may improve, for example, impingement mixing at the gun, and may be provided by modeling in a test bench the mixing at various pressure differences, via simulation (e.g., fluid modeling simulation), and so on.

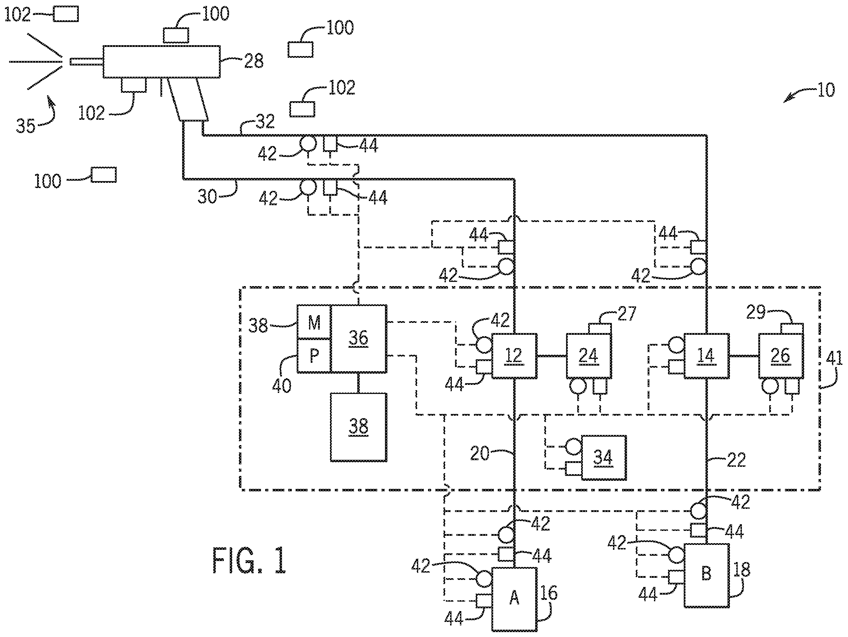

It may be useful to describe a system that may apply improved control for impingement mixing as described herein. Accordingly and turning now to FIG. 1, the figure is a block diagram illustrating an embodiment of a spray application system 10 that may include one or more liquid pumps 12, 14. The spray application system 10 may be suitable for mixing and dispensing a variety of chemicals, such as a chemicals used in applying spray foam insulation. In the depicted embodiment, chemical compounds A and B may be stored in tanks 16 and 18, respectively. The tanks 16 and 18 may be fluidly coupled to the pumps 12 and 14 via conduits or hoses 20 and 22. It is to be understood that while the depicted embodiment for the spray application system 10 shows two compounds used for mixing and spraying, other embodiments may use a single compound or 3, 4, 5, 6, 7, 8 or more compounds. The pumps 12 and 14 may be independently controlled.

During operations of the spray application system 10, the pumps 12, 14 may be mechanically powered by motors 24, 26, respectively. In a preferred embodiment, the motors may be electric motors. However, internal combustion engines (e.g., diesel engines), pneumatic motors, or a combination thereof. Motor controllers 27 and 29 may be used to provide for motor start/stop, loading, and control based on signals transmitted, for example, from the processor 40. The motor 24 may be of the same type or of a different type from the motor 26. Likewise, the pump 12 may be of the same type or of different type from the pump 14. Indeed, the techniques described herein may be used with multiple pumps 12, 14, and multiple motors 24, 26, which may be of different types.

The pumps 12, 14 provide for hydrodynamic forces suitable for moving the compounds A, B into a spray gun system 28. More specifically, compound A may traverse the pump 12 through conduit 20 and then through a heated conduit 30 into the spray gun system 28 to be mixed via impingement with compound B. Likewise, compound B may traverse pump 14 through conduit 22 and then through a heated conduit 32 into the spray gun system 28 to be mixed via impingement with compound A. To heat the heated conduits 30, 32, a heating system 34 may be provided. The heating system 34 may provide for thermal energy, such as a heated fluid, suitable for pre-heating the compounds A and B before mixing and spraying and for heating the compounds A and B during mixing and spraying.

The spray gun system 28 may include a mixing chamber to mix the compounds A and B. For spray foam insulation applications, the compound A may include isocyanates while the compound B may include polyols, flame retardants, blowing agents, amine or metal catalysts, surfactants, and other chemicals. When mixed, an exothermic chemical reaction occurs and a foam 35 is sprayed onto a target. The foam then provides for insulative properties at various thermal resistance (i.e., R-values) based on the chemicals found in the compounds A and B.

Control for the spray application system 10 may be provided by a control system 36. The control system 36 may include an industrial controller, and thus include a memory 38 and a processor 40. The processor 40 may include multiple microprocessors, one or more "general-purpose" microprocessors, one or more special-purpose microprocessors, one or more application specific integrated circuits (ASICS), and/or one or more reduced instruction set (RISC) processors, or some combination thereof. The memory 38 may include a volatile memory, such as random access memory (RAM), and/or a nonvolatile memory, such as ROM, a hard drive, a memory card, a memory stick (e.g., USB stick) and so on. The memory 38 may include computer programs or instructions executable by the processor 40 and suitable for controlling the spray application system 10. The memory 38 may further include computer programs or instructions executable by the processor 40 and suitable for detecting pump 12, 14 slip and for providing ratio control actions to continue providing as desired ratio (e.g., 1:1) for compounds A and B in the presence of slip, as further described below.

The control system 36 may be communicatively coupled to one or more sensors 42 and operatively coupled to one or more actuators 44. The sensors 42 may include pressure sensors, flow sensors, temperature sensors, chemical composition sensors, speed (e.g., rotary speed, linear speed) sensors, electric measurement sensors (e.g., voltage, amperage, resistance, capacitance, inductance), level (e.g., fluid level) sensors, limit switches, and so on. The actuators 44 may include valves, actuatable switches (e.g., solenoids), positioners, heating elements, and so on.

A user or users may interface with the control system 36 via an input/output (I/O) system 38, which may include touchscreens, displays, keyboards, mice, augmented reality/virtual reality systems, as well as tablets, smartphones, notebooks, and so on. A user may input desired pressures, flow rates, temperatures, ratio between compound A and compound B (e.g., 1:1), alarm thresholds (e.g., threshold fluid levels of compound A, B in tanks 16, 18), and so on. The user may then spray via the spray gun system 28 and the control system 36 may use the processor 40 to execute one or more programs stored in the memory 38 suitable for sensing system 10 conditions via the sensors 42 and for adjusting various parameters of the system 10 via the actuators 44 based on the user inputs. The I/O system 38 may then display several of the sensed conditions as well as the adjusted parameters. Certain components of the spray application system 10 may be included in or interface with a proportioning system 41. The proportioning system 41 may "proportion" or deliver the compounds A, B at a specified ratio (e.g., 1:1) to achieve the spray 35. In this manner, the user(s) may mix and spray chemicals, such as compounds A and B, to provide for certain coatings, such as insulative spray foam.

As mentioned earlier, the pumps 12, 14 may be independently controlled. The system 10 improves control by having:

- Independent pressure and temperature sensing at or near the spray gun
- Independent pressure and temperature control of the two fluids from the proportioner to the spray gun.
- Independent control of fluid pressure and temperature based on pressure and temperature sensing at or near the spray gun.

To improve on the current systems, system 10 may use pressure and temperature sensing at or near the spray gun, and the use of these sensing signals to control independent pump actuators and heating systems. In turn, this level of independent control, based on pressure, flows, and/or temperature at or near the spray gun, results in improved control of impingement mixing within the spray gun.

In our approach, independent pressure sensors located at or near the spray gun (in the hoses 30, 32, in the outlet of the pumps 12, 14) may transmit pressure signals to the proportioner 41, where they are used in the pump actuator control system (e.g. control system 36) to achieve the desired output at the spray gun 28. The control system 36 can be configured to achieve independent _pressure_ control in the two materials at or near the gun, or to minimize or to eliminate the _pressure differences_ between the two materials at or near the gun. In addition, the pressure control algorithm can be configured to provide better equalization and control of impingement _momentums_ of the two streams at or near the gun. Momentum equalization control can be important if/when there are known differences between the two fluids or orifice geometries that affect impingement stream momentums (e.g. fluid density of the two materials, orifice size of the two sides within the gun, etc.). An example of momentum equalization control would be to minimize the differences between "pseudo momentum" parameters $M_A$ and $M_B$ at a desired $P_A$ or $P_B$ (A or B fluid pressure)

$$M_A = P_A \text{ x } \rho_A \text{ X } D_A{}^2$$

$$M_B = P_B \text{ x } \rho_B \text{ X } D_B{}^2$$

$M_A$ = Pseudo momentum of A stream within the mix chamber
$M_B$ = Pseudo momentum of B stream within the mix chamber
$P_A$ = Fluid pressure of A material in the hose at/near the spray gun
$P_B$ = Fluid pressure of B material in the hose at/near the spray gun
$\rho_A$ = Density of A fluid
$\rho_B$ = Density of B fluid
$D_A$ = Diameter of the A orifice in the gun
$D_B$ = Diameter of the B orifice in the gun

Independent pressure sensors 100 located in the vicinity of the spray gun that communicate signals from the vicinity of the spray gun to a Proportioning unit located outside of the spray area. The Proportioning unit controls a pump or pumps in a manner to minimize the pressure differences between the independent pressure sensors 100 located in the vicinity of the spray gun. These pressure sensors 100 can be within the gun, attached to portions of hoses, hose couplings or fittings for the two hoses, or within a fluid manifold structure near the gun that has independent inlet and outlet fluid passages for the two materials, and or pump 12, 14 outlets.

Independent pressure sensors 100 located in the vicinity of the spray gun that communicate signals from the vicinity of the spray gun to a proportioning unit located outside of the spray area. The proportioning system 41 controls a pump or pumps in a manner to minimize the momentum differences between the two impinging streams of fluid within the gun mix chamber by controlling pressures of the two streams to calculated levels that include other known fluid and geometric parameters that differ between the two fluid streams. The pressure sensors 100 can be within the gun, attached to hose couplings or fittings for the two hoses, or within a fluid manifold structure near the gun that has independent inlet and outlet fluid passages for the two materials.

Independent temperature sensors 102 located in the vicinity of the spray gun that communicate signals from the vicinity of the spray gun to a proportioning unit located outside of the spray area. The Proportioning system 41 controls the temperature of the fluids independently to achieve desired temperatures at the spay gun. These temperature sensors 102 can be within the gun, attached to hose couplings or fittings for the two hoses (as well as in or around hoses), or within a fluid manifold structure near the gun that has independent inlet and outlet fluid passages for the two materials. Sensors on or near the gun and on or near fluid conduits (e.g., sensors 100, 102), such as fluid conduits 30, 32, may communicate with the control system 36 via wired means. For example, the conduits 30 32 may transmit electrical signals and/or electrical power in addition to working as fluid conduits. For example, the conduits 30, 32 may be smart hoses that include conductive elements embedded in the hoses. It is to be understood that the sensors, e.g.,

sensors 100, 102 may also communicate via wireless means (e.g., Wi-Fi, Bluetooth, mesh networks, and so on).

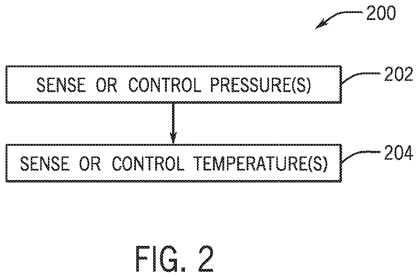

Turning to FIG. 2, the figure illustrates a process 200 that may be used to implement certain of the techniques described herein. The process 200 may be implemented as computer code or instructions executable via, for example, the processor 40. It is to be noted that the blocks of the process 200 may be executed in any order or concurrently (e.g., in parallel with each other). In the depicted example, the process 200 may first sense or control pressures. For example, pressure sensors 100 located at or near the spray gun, in the hoses (or hose fittings) 30, 32, in the outlet of the pumps 12, 14, may transmit pressure signals to the processor 40. The processor 40 may then independently control pressure of the A and B compound (and/or any other two or more fluids) to minimize or to eliminate the pressure differences between the two (or more) materials at or near the gun 28, as described above, e.g., by adjusting pump rates, temperatures, flows, and so on, to arrive at equal pressures between A and B compounds.

The process 200 may also measure and/or control temperature (block 204). For example, temperature sensors 102 may be used to derive temperatures at or near the gun, at or near hoses, at our near pumps (e.g., pump outlets). The temperatures may then be used, for example via ideal gas law so that pressure x volume = n (moles) x R (gas constant) x Temperature (in Kelvins). Again, independent control of temperatures of the hoses, of the tanks (e.g., compound A and/or compound B tanks), and/or gun temperatures may be used to provide for equal pressure of fluids entering the gun. It is also to be noted that flow rates may be sensed, along with temperatures and/or pressures, to result in equal pressures of fluid being delivered to the gun 28.

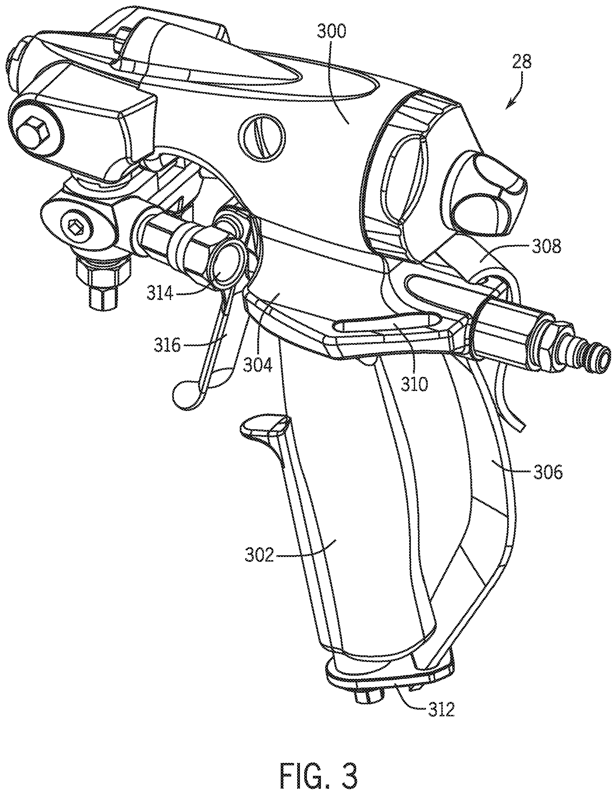

Turning to FIG. 3, the figure is a side perspective view of an embodiment of the spray gun system 28. In the depicted embodiment, spray gun system 28 may include a gun body 300 and a gun handle 302. In certain embodiments, a winged extension member 304 may be disposed between the gun body 300 and the gun handle 302. The winged extension member 304 may be used, for example, to improve weight distribution of the spray gun system 28 when being held by a user. That is, the winged extension member 304 may conformably fit on a top surface of a thumb, top surface of an index finger, top surface of webbing between the thumb and index finger, and top surface of a portion of the back of the user's hand, and thus increase a contact area between the spray gun system 28 and the user's hand. It is to be noted that the winged extension member 304 may be a component of the gun handle 302, the gun body 300, or a combination thereof. Likewise, the winged extension member 304 may be an independent component. The winged extension member 304 may also be provided in various sizes, e.g., small, medium, large, extra-large, to more conformably fit a variety of hand sizes. The winged extension member 304 may be sized so as to completely cover the user's hand when viewed from above, or to only partially cover the user's hand. The winged extension member 304 may have a side-to-side dimension (e.g., distance between a left edge of the winged extension member 304 and a right edge) of between 5.08 cm and 15.24 cm, equivalently between 2-6 inches.

The spray gun system 28 may also include a strap 306 which may aid in maintaining a firmer contact between he spray gun system 28 as well as in adding further surface area for carrying the spray gun 28. The strap 306 may be manufactured of a variety of materials, including fabrics (e.g., nylon), leather, plastics, rubber, or a combination thereof. The strap 306 may attach to the winged extension member 304 via openings 308, 310 and to a bottom portion of the spray gun system 28 via an attachment member 312. The strap 306 may be repositioned for right hand or right hand use, for example, by attaching the strap to right opening 308 or to left opening 310. The strap 306 may also be removable so that the spray gun system 28 may be used without the strap 306. As shown, the spray gun system 28 enable ambidextrous use. That is, the spray gun system 28 may be held by either of the right hand or the left hand.

In use, the operator would mechanically couple the hoses 30, 32 with the spray gun system 28, for example, by using hose couples, such as quick detach hose couplers, such as a left coupler 314. When the hoses 30 and 32 are attached to the spray gun 28, the operator may then exert finger pressure on a trigger 316, which in turn may enable the flow of fluid A from tank 16 and B from tank 18 into the spray gun system 28. The fluids A and B may then be mixed in an impingement chamber, as further described below, and the mixed fluid may then be sprayed onto a desired target area.

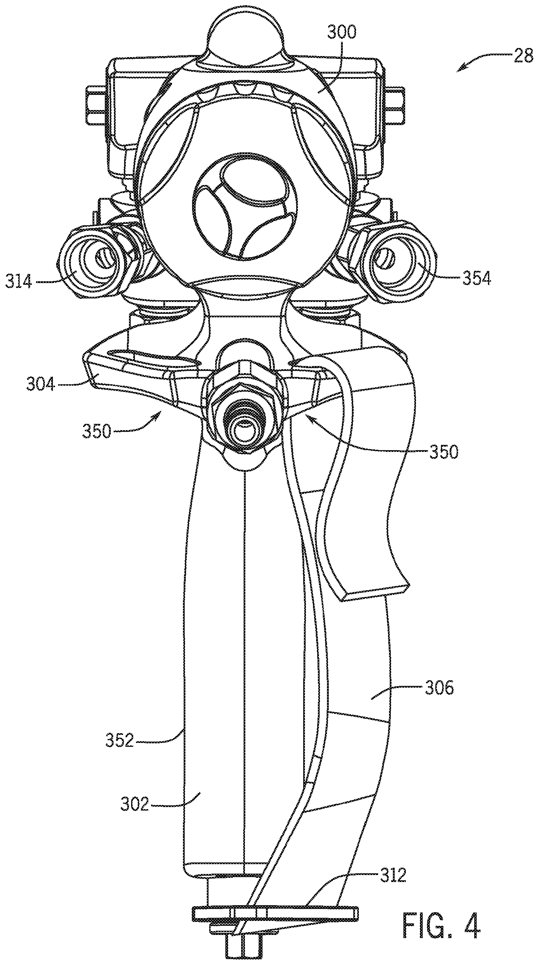

FIG. 4 is a rear perspective view illustrating an embodiment of the spray gun system 28. In the depicted embodiment, the winged extension member 304 is shown as including curved bottom portions 350. The curved bottom portions 350 may ergonomically enhance comfort and conformability of the winged extension member 304 to the thumb, index finger, and back hand portions when the spray gun system 28 is held by the user. Other ergonomic features may include palm swells 352, and/or the use of the strap 306. Also shown is the left coupler 314 and a right coupler 354 used to connect (e.g., quick connect) hoses 30 and 32.

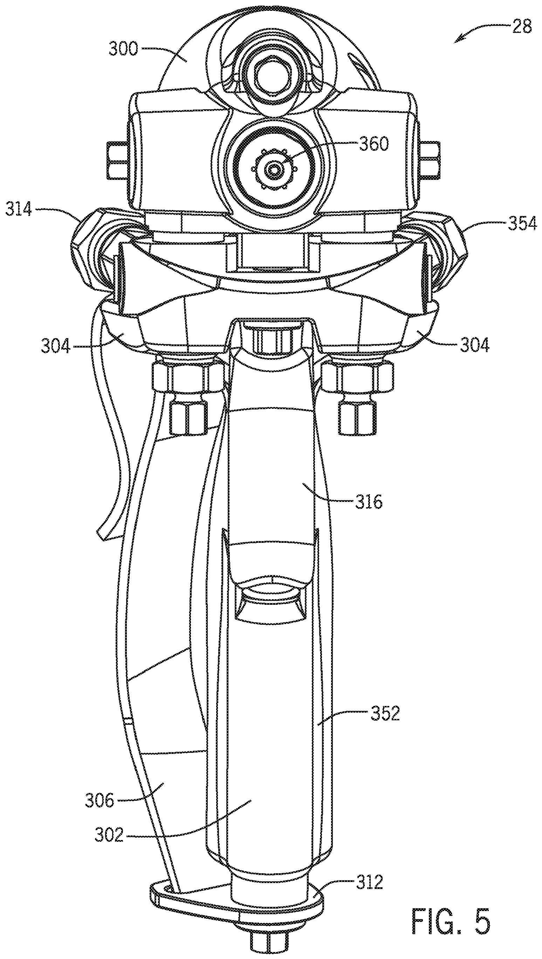

FIG. 5 is a front perspective view showing an embodiment of the spray gun system 28. In the depicted embodiment, the left coupler 314 and the right coupler 354 are shown disposed over the winged extension member 304. Accordingly, hoses 30 and 32 may be carried above the user's hand, enhancing comfort during spray operations. The operator may position the strap 306 for a specific hand, e.g., left hand or right hand. The user may additionally adjust the strap 306 to fit his or her specific hand size, including adjustment for use when wearing gloves.

The operator may attach hoses 30 and 32 to the spray gun system 28 via the hose couplers m and 354. The user may then carry the spray gun system 28 to a desired area for use, and apply pressure (e.g., finger pressure) onto the trigger 316. The trigger 316 may then result in compound A and compound B being injected into a mix chamber of the spray gun system 316, which may then mix compound A and B and the mixed fluid may then exit the spray gun system 28 via a mix tip 360. In certain embodiments, compound A and compound B may be controlled to enter at the same pressure. That is, a pressure for compound A may be equal to a pressure for compound B when compounds A and B are entering the spray gun system 28 via the hose couplers 314 and 354. The pressure of compound A and B being equal at the spray gun system 28, for example equal pressures at a mixing chamber of the spray gun system 28 may result in improved mixing and delivery of, for example, foam insulation via the spray gun system 28.

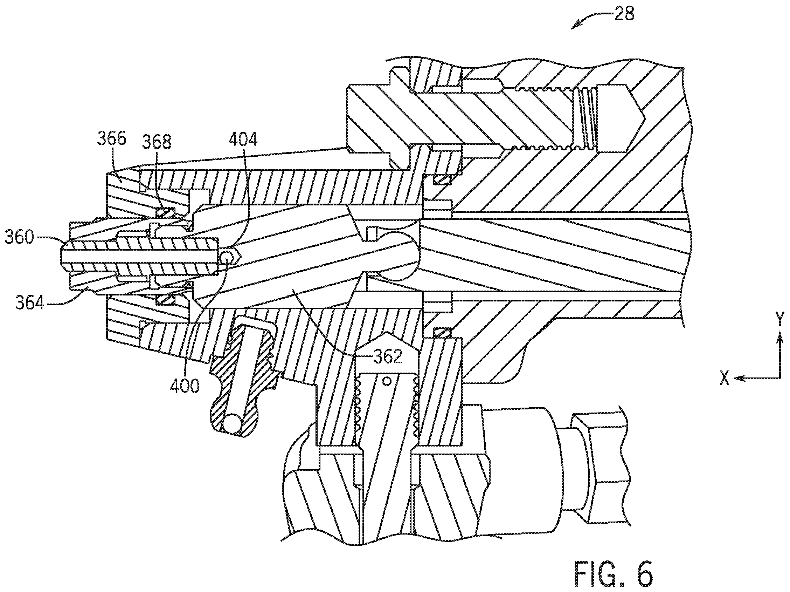

FIG. 6 is a schematic side view of a front portion of an embodiment of the spray gun system 28 showing a mix chamber assembly 362 when the trigger 316 is in a "resting" position. In the depicted embodiment, the spray gun 28 does not include an air cap. That is, air caps are used in other spray guns to direct the flow of air, either for aiding in mixing fluid and/or for providing fluid flow that cleans (e.g., ancillary clean-off air) certain portions of the spray gun. The spray gun system 28 embodiment shown in FIG. 6 does not include an air cap. Instead, the mixing chamber assembly 362 receives two fluids via the hose couplers 314 and 354 during activation of the trigger 316, the mixing chamber assembly 362 then mixes the fluids, and expels the now mixed fluid through the mix tip 360. More specifically, the mixing chamber assembly 362 may include two lateral bores, such as a bore 400, leading into a chamber 404. Fluid may enter through the two bores to be mixed in the chamber 404.

Any clean-off air also flows into the mixing chamber assembly 362 and exits out through the mix tip 360. Also shown is a mix tip retainer member 364 used to retain the mix tip 360 on a font portion of the spray gun system 28. A mix tip retainer guide assembly 366 is also shown, which is used to position the mix tip retainer member 364 at the front portion of the spray gun system 28. An O-ring or seal 368 may prevent unwanted fluid escaping through an interface between the mix tip retainer member 364 and the mix tip retainer guide assembly 366.

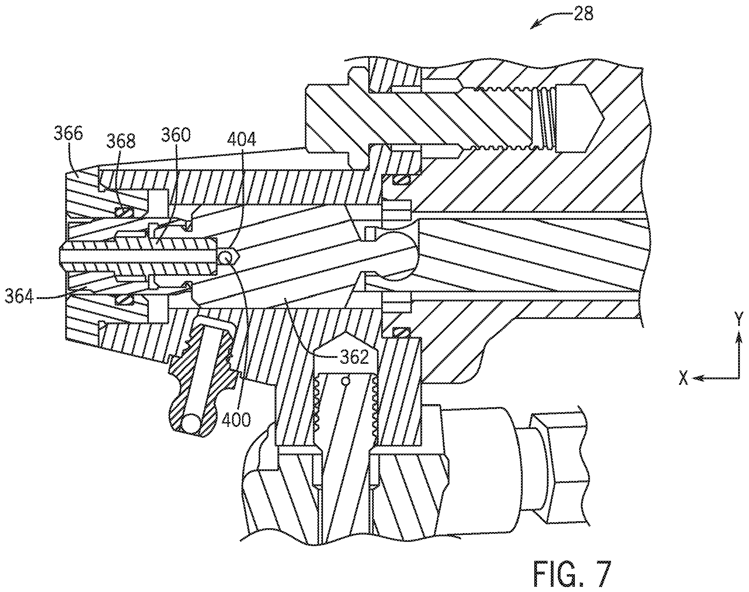

FIG. 7 shows the mixing chamber assembly 362 when the trigger 316 is pressed. More specifically, FIG. 7 is a schematic side view of a front portion of an embodiment of the spray gun system 28 showing the mix chamber assembly 362 in a "spray" position. In the depicted embodiment, the trigger 316 has been pressed to cause a movement rearward of the mix chamber assembly 362 and interconnected mix tip retainer member 364 and mix tip 360. The mix tip retainer guide assembly 366 remains in place. As the mix chamber assembly 362 moves rearward away from the mix tip retainer guide as-

sembly 366, two fluids enter into the mix chamber assembly 362 via the hose couplers 314 and 354. The fluids may then mix in the mix chamber assembly 362 via bores such as the bore 400 to be mixed in the chamber 404 and then to be subsequently sprayed outwardly from the mix tip 360. In some embodiments, a Zerk or grease fitting 380 may be used to insert a grease or other compound into the mix chamber assembly 362, for example, for temporary storage of the spray gun system 28. The grease may subsequently be expelled by adding air into the mix chamber assembly 362, and spray operations may then resume.

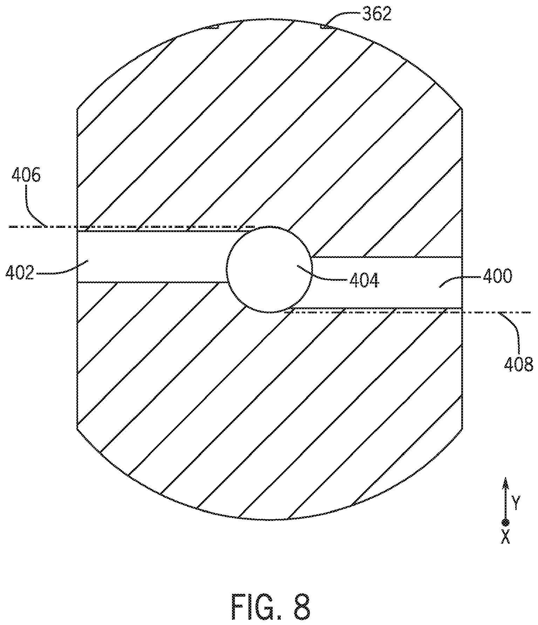

FIG. 8 is a front view showing an embodiment of the mix chamber assembly 362 showing two lateral bores 400, 402 leading into the chamber 404. In the depicted embodiment, both of the lateral bores 400, 402, enter the chamber 404 inside of and away from tangent. That is, the lateral bores 400 and 402 enter the chamber 404 inside of tangent lines 406 and 408 respectively. Fluid, such as compounds A and B, may enter through the lateral bores 400, 402, and then mix inside of the chamber 404. As mentioned earlier, pressures of fluid entering the lateral bores 400 and 402 may be equal. That is, if compound A enters via lateral bore 400 and compound B enters via lateral bore 402, pressures at lateral bores 400 and 402 may be the same. The fluids may then exit the chamber along the X-axis into the mix tip 360 and out of the spray gun 28 into a desired spray area.

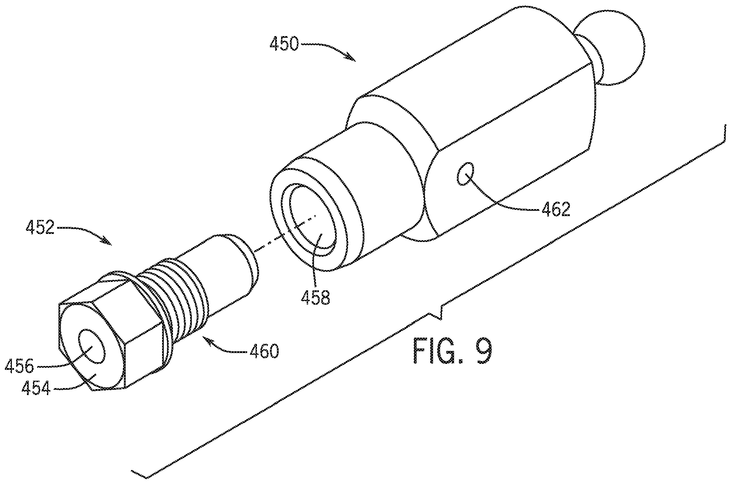

FIG. 9 is a perspective view depicting an embodiment of a threaded mix chamber assembly 450 and a mix tip 452. In the depicted embodiment, the threaded mix chamber assembly 450 and a mix tip 452 may not use a mix tip retainer member 364, thus providing for a simpler design with less component parts. Further, replacing the mix tip 452 may be more efficiently performed by unscrewing the mix tip 452, for example by using a wrench via a head portion 454 of mix tip 452 to remove the mix tip 452. Various mix tips 452 may be provided, for example, having different sizes for an opening 456. The opening 456 may be suitable for spraying various types of compound mixes and/or spray patterns.

The mix tip 452 may be inserted via an opening (e.g., grooved opening) 458 of the threaded mix chamber assembly 450. Threaded portions 460 may then engage grooves in the threaded mix chamber assembly 450 to secure the mix tip 452 in place. As the trigger 316 is depressed, fluid may enter via bores, such a bore 462, to be mixed in a chamber of the threaded mix chamber assembly 450. Fluid may then exit the chamber into the mix tip 452 to be sprayed outwardly from the opening 456.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art as long as these examples fall within the scope of the appended claims.

## Claims

1. A spray gun (28), comprising:

   a mix chamber assembly (362, 450) having at least two bores (400, 402) configured to receive a first fluid and a second fluid, and a chamber (404) fluidly coupled to the at least two bores (400, 402), the chamber (404) configured to mix the first and the second fluid;
   a handle (302); and
   a winged extension (304) disposed to contact at least a portion of an operator's back hand when the operator holds the spray gun via the handle (302),

   **characterized in that** the spray gun (28) comprises a strap (306), wherein the winged extension (304) comprises a first opening (308) configured to receive a first end of the strap (306), and wherein a second end of the strap (306) attaches to a lower portion of the handle (302).

2. The spray gun (28) of claim 1, wherein the winged extension (304) comprises a side-to-side length of between 5.08 cm and 15.24 cm, equivalently between 2 inches and 6 inches.

3. The spray gun (28) of claim 1, wherein the winged extension (304) comprises a first underside groove configured to conformably fit an upper portion of the operator's thumb.

4. The spray gun (28) of claim 3, wherein the winged extension (304) comprises a second underside groove configured to conformably fit an upper portion of the operator's index finger.

5. The spray gun (28) of claim 1, wherein the winged extension (304) comprises a second opening (310) configured to receive the first end of the strap (306), and wherein the first end of the strap may be inserted into the first opening (308) or into the second opening (310).

6. The spray gun (28) of claim 1, wherein the spray gun (28) comprises a first hose coupler (314) fluidly coupled to a first bore included in the at least two bores (400, 402) and configured to couple to a first hose, and a second hose coupler (354) fluidly coupled to a second bore included in the at least two bores (400, 402) and configured to couple to a second hose.

7. The spray gun (28) of claim 1, comprising a first threaded mix tip (452), wherein the mix chamber assembly (450) comprises a grooved opening (458) leading to the chamber (404), wherein the grooved opening (458) is sized to receive the first threaded mix tip (452), and wherein the first threaded mix tip comprises a first spray opening to be fluidly coupled to the chamber (404) to spray a mixed fluid resulting from the first fluid and the second fluid mixing in the chamber (404).

8. The spray gun (28) of claim 7, comprising a second threaded mix tip (452) having a second spray opening sized at a different size than the first spray opening of the the first threaded mix tip and wherein the first threaded mix tip is configured to be removed from the mix chamber assembly (450) and replaced by the second threaded mix tip.

9. The spray gun (28) of claim 1, wherein the spray gun (28) does not include an air cap.

10. A fluid delivery system (10), comprising a spray gun (28) according to any preceding claim,

11. A method of manufacturing a spray gun (28), comprising:

    manufacturing a mix chamber assembly (362, 450) having at least two bores (400, 402) configured to receive a first fluid and a second fluid, and a chamber (404) fluidly coupled to the at least two bores, the chamber (404) configured to mix the first and the second fluid,
    manufacturing a handle (302) having a winged extension (304) disposed to contact at least a portion of an operator's back hand when the operator holds the spray gun (28) via the handle (302);
    manufacturing a spray gun body (300); and
    manufacturing a spray gun head configured to receive the chamber,
    **characterized in that** the winged extension (302) comprises a first and a second opening (308, 310) configured to receive a first end of a strap, and wherein the first end of the strap may be inserted into the first opening (308) or into the second opening (310).

12. The method of claim 11, wherein the winged extension (304) comprises a side-to-side length of between 5.08 cm and 15.24 cm, equivalently between 2 inches and 6 inches.

13. The method of claim 11, wherein the winged extension (304) comprises a first underside groove configured to conformably fit an upper portion of the operator's thumb.

14. The method of claim 13, wherein the winged extension (304) comprises a second underside groove configured to conformably fit an upper portion of the operator's index finger.

**Patentansprüche**

1. Spritzpistole (28), umfassend:

   eine Mischkammeranordnung (362, 450), die mindestens zwei Bohrungen (400, 402) aufweist, die dazu konfiguriert sind, eine erste Flüssigkeit und eine zweite Flüssigkeit aufzunehmen, sowie eine Kammer (404), die fluidisch mit den mindestens zwei Bohrungen (400, 402) gekoppelt ist, wobei die Kammer (404) dazu konfiguriert ist, die erste und die zweite Flüssigkeit zu mischen;
   einen Griff (302); und
   eine Flügelverlängerung (304), die angeordnet ist, um mindestens einen Teil des Handrückens eines Bedieners zu berühren, wenn der Bediener die Spritzpistole über den Griff (302) hält, **dadurch gekennzeichnet, dass** die Spritzpistole (28) einen Riemen (306) umfasst, wobei die Flügelverlängerung (304) eine erste Öffnung (308) umfasst, die zur Aufnahme eines ersten Endes des Riemens (306) konfiguriert ist, und wobei ein zweites Ende des Riemens (306) an einem unteren Teil des Griffs (302) befestigt ist.

2. Spritzpistole (28) nach Anspruch 1, wobei die Flügelverlängerung (304) eine seitliche Länge zwischen 5,08 cm und 15,24 cm umfasst, was äquivalent zu zwischen 2 Zoll und 6 Zoll ist.

3. Spritzpistole (28) nach Anspruch 1, wobei die Flügelverlängerung (304) eine erste Nut an der Unterseite umfasst, die dazu konfiguriert ist, angemessen an einem oberen Teil des Daumens des Bedieners zu passen.

4. Spritzpistole (28) nach Anspruch 3, wobei die Flügelverlängerung (304) eine zweite Nut an der Unterseite umfasst, die dazu konfiguriert ist, angemessen an einem oberen Teil des Zeigefingers des Bedieners zu passen.

5. Spritzpistole (28) nach Anspruch 1, wobei die Flügelverlängerung (304) eine zweite Öffnung (310) umfasst, die zur Aufnahme des ersten Endes des Riemens (306) konfiguriert ist, und wobei das erste Ende des Riemens in die erste Öffnung (308) oder in die zweite Öffnung (310) eingeführt werden kann.

6. Spritzpistole (28) nach Anspruch 1, wobei die Spritzpistole (28) eine erste Schlauchkopplung (314) umfasst, die fluidisch mit einer ersten Bohrung gekoppelt ist, die in den mindestens zwei Bohrungen (400, 402) beinhaltet ist, und zum Koppeln mit einem ersten Schlauch konfiguriert ist, sowie eine zweite Schlauchkopplung (354), die fluidisch mit einer zweiten Bohrung gekoppelt ist, die in den mindestens zwei Bohrungen (400, 402) beinhaltet ist, und zum Koppeln mit einem zweiten Schlauch konfiguriert ist.

7. Spritzpistole (28) nach Anspruch 1, die eine erste mit Gewinde versehene Mischspitze (452) umfasst, wobei die Mischkammeranordnung (450) eine gerillte Öffnung (458) umfasst, die zu der Kammer (404) führt, wobei die gerillte Öffnung (458) bemessen ist, um die erste mit Gewinde versehene Mischspitze (452) aufzunehmen, und wobei die erste mit Gewinde versehene Mischspitze eine erste Sprühöffnung umfasst, die fluidisch mit der Kammer (404) gekoppelt werden soll, um eine gemischte Flüssigkeit zu sprühen, die aus der Mischung der ersten Flüssigkeit und der zweiten Flüssigkeit in der Kammer (404) resultiert.

8. Spritzpistole (28) nach Anspruch 7, die eine zweite mit Gewinde versehene Mischspitze (452) umfasst, die eine zweite Sprühöffnung mit einer anderen Größe als die erste Sprühöffnung der ersten mit Gewinde versehenen Mischspitze aufweist, und wobei die erste mit Gewinde versehene Mischspitze dazu konfiguriert ist, von der Mischkammeranordnung (450) entfernt und durch die zweite mit Gewinde versehene Mischspitze ersetzt zu werden.

9. Spritzpistole (28) nach Anspruch 1, wobei die Spritzpistole (28) keine Luftkappe beinhaltet.

10. Flüssigkeitsabgabesystem (10), das eine Spritzpistole (28) nach einem vorstehenden Anspruch umfasst.

11. Verfahren zum Herstellen einer Spritzpistole (28), umfassend:

    Herstellen einer Mischkammeranordnung (362, 450), die mindestens zwei Bohrungen (400, 402) aufweist, die zum Aufnehmen einer ersten Flüssigkeit und einer zweiten Flüssigkeit konfiguriert sind, sowie eine Kammer (404), die mit den mindestens zwei Bohrungen fluidisch gekoppelt ist, wobei die Kammer (404) zum Mischen der ersten und der zweiten Flüssigkeit konfiguriert ist,
    Herstellen eines Griffs (302), der eine Flügelverlängerung (304) aufweist, die angeordnet ist, um mindestens einen Teil des Handrückens eines Bedieners zu berühren, wenn der Bediener die Spritzpistole (28) über den Griff (302) hält;
    Herstellen eines Spritzpistolenkörpers (300); und

Herstellen eines Spritzpistolenkopfes, der dazu konfiguriert ist, die Kammer aufzunehmen, **dadurch gekennzeichnet, dass** die Flügelverlängerung (302) eine erste und eine zweite Öffnung (308, 310) umfasst, die zur Aufnahme eines ersten Endes eines Riemens konfiguriert sind, und wobei das erste Ende des Riemens in die erste Öffnung (308) oder in die zweite Öffnung (310) eingeführt werden kann.

**12.** Verfahren nach Anspruch 11, wobei die Flügelverlängerung (304) eine seitliche Länge zwischen 5,08 cm und 15,24 cm umfasst, was äquivalent zu zwischen 2 Zoll und 6 Zoll ist.

**13.** Verfahren nach Anspruch 11, wobei die Flügelverlängerung (304) eine erste Nut an der Unterseite umfasst, die dazu konfiguriert ist, angemessen an einem oberen Teil des Daumens des Bedieners passen.

**14.** Verfahren nach Anspruch 13, wobei die geflügelte Verlängerung (304) eine zweite Nut an der Unterseite umfasst, die dazu konfiguriert ist, angemessen an einem oberen Teil des Zeigefingers des Bedieners zu passen.

**Revendications**

**1.** Pistolet de pulvérisation (28), comprenant :

un ensemble chambre de mélange (362, 450) présentant au moins deux alésages (400, 402) configurés pour recevoir un premier fluide et un second fluide, et une chambre (404) couplée fluidiquement aux au moins deux alésages (400, 402), la chambre (404) étant configurée pour mélanger les premier et second fluides ;
une poignée (302) ; et
une extension ailée (304) disposée pour entrer en contact avec au moins une partie du dos de la main d'un opérateur lorsque l'opérateur tient le pistolet de pulvérisation par l'intermédiaire de la poignée (302),
**caractérisé en ce que** le pistolet de pulvérisation (28) comprend une sangle (306), dans lequel l'extension ailée (304) comprend une première ouverture (308) configurée pour recevoir une première extrémité de la sangle (306), et dans lequel une seconde extrémité de la sangle (306) s'attache à une partie inférieure de la poignée (302).

**2.** Pistolet de pulvérisation (28) selon la revendication 1, dans lequel l'extension ailée (304) comprend une longueur côte-à-côte faisant entre 5,08 cm et 15,24 cm, ce qui équivaut à entre 2 pouces et 6 pouces.

**3.** Pistolet de pulvérisation (28) selon la revendication 1, dans lequel l'extension ailée (304) comprend une première rainure de dessous configurée pour s'adapter de manière conforme à une partie supérieure du pouce de l'opérateur.

**4.** Pistolet de pulvérisation (28) selon la revendication 3, dans lequel l'extension ailée (304) comprend une seconde rainure de dessous configurée pour s'adapter de manière conforme à une partie supérieure de l'index de l'opérateur.

**5.** Pistolet de pulvérisation (28) selon la revendication 1, dans lequel l'extension ailée (304) comprend une seconde ouverture (310) configurée pour recevoir la première extrémité de la sangle (306), et dans lequel la première extrémité de la sangle peut être insérée dans la première ouverture (308) ou dans la seconde ouverture (310).

**6.** Pistolet de pulvérisation (28) selon la revendication 1, dans lequel le pistolet pulvérisateur (28) comprend un premier raccord de tuyau flexible (314) couplé fluidiquement à un premier alésage inclus dans les au moins deux alésages (400, 402) et configuré pour se coupler à un premier tuyau flexible, et un second raccord de tuyau flexible (354) couplé fluidiquement à un second alésage inclus dans les au moins deux alésages (400, 402) et configuré pour se coupler à un second tuyau flexible.

**7.** Pistolet de pulvérisation (28) selon la revendication 1, comprenant un premier bout de mélange fileté (452), dans lequel l'ensemble chambre de mélange (450) comprend une ouverture rainurée (458) conduisant à la chambre (404), dans lequel l'ouverture rainurée (458) est dimensionnée pour recevoir le premier bout de mélange fileté (452), et dans lequel le premier bout de mélange fileté comprend une première ouverture de pulvérisation destinée à être couplée fluidiquement à la chambre (404) pour pulvériser un fluide mélangé résultant du mélange du premier fluide et du second fluide dans la chambre (404).

**8.** Pistolet de pulvérisation (28) selon la revendication 7, comprenant un second bout de mélange fileté (452) présentant une seconde ouverture de pulvérisation d'une taille différente de celle de la première ouverture de pulvérisation du premier bout de mélange fileté et dans lequel le premier bout de mélange fileté est configuré pour être enlevé de l'ensemble chambre de mélange (450) et remplacé par le second bout de mélange fileté.

**9.** Pistolet de pulvérisation (28) selon la revendication 1, dans lequel le pistolet de pulvérisation (28) n'inclut pas de capuchon d'air.

**10.** Système de distribution de fluide (10), comprenant un pistolet de pulvérisation (28) selon une quelconque revendication précédente,

**11.** Procédé de fabrication d'un pistolet de pulvérisation (28), comprenant :

la fabrication d'un ensemble chambre de mélange (362, 450) présentant au moins deux alésages (400, 402) configurés pour recevoir un premier fluide et un second fluide, et une chambre (404) couplée fluidiquement aux au moins deux alésages, la chambre (404) étant configurée pour mélanger les premier et second fluides, la fabrication d'une poignée (302) présentant une extension ailée (304) disposée pour entrer en contact avec au moins une partie du dos de la main d'un opérateur lorsque l'opérateur tient le pistolet de pulvérisation (28) par l'intermédiaire de la poignée (302) ; la fabrication d'un corps de pistolet de pulvérisation (300) ; et la fabrication d'une tête de pistolet de pulvérisation configurée pour recevoir la chambre, **caractérisé en ce que** l'extension ailée (302) comprend une première et une seconde ouverture (308, 310) configurées pour recevoir une première extrémité d'une sangle, et dans lequel la première extrémité de la sangle peut être insérée dans la première ouverture (308) ou dans la seconde ouverture (310).

**12.** Procédé selon la revendication 11, dans lequel l'extension ailée (304) comprend une longueur côte-à-côte faisant entre 5,08 cm et 15,24 cm, ce qui équivaut à entre 2 pouces et 6 pouces.

**13.** Procédé selon la revendication 11, dans lequel l'extension ailée (304) comprend une première rainure de dessous configurée pour s'adapter de manière conforme à une partie supérieure du pouce de l'opérateur.

**14.** Procédé selon la revendication 13, dans lequel l'extension ailée (304) comprend une seconde rainure de dessous configurée pour s'adapter de manière conforme à une partie supérieure de l'index de l'opérateur.

FIG. 1

EP 4 051 438 B1

200

| SENSE OR CONTROL PRESSURE(S) | 202 |

↓

| SENSE OR CONTROL TEMPERATURE(S) | 204 |

# FIG. 2

FIG. 3

FIG. 4

FIG. 5

FIG. 6

FIG. 7

EP 4 051 438 B1

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018204321 A1
- US 6158624 A
- US 3790030 A
- WO 2005018900 A1
- US 2015129685 A1
- US 2012012677 A1
- US 2013061725 A1